Europäisches Patentamt

European Patent Office

Office européen des brevets

(11) Veröffentlichungsnummer: **0 412 244 B1**

## (12) EUROPÄISCHE PATENTSCHRIFT

(45) Veröffentlichungstag der Patentschrift: **19.01.94**

(21) Anmeldenummer: **90107919.4**

(22) Anmeldetag: **26.04.90**

(51) Int. Cl.5: **F23N 1/00**, F23N 5/02, G05D 23/20

---

(54) Verfahren und Vorrichtung zum Regeln der Temperatur eines Heizkessels.

---

(30) Priorität: **08.08.89 CH 2912/89**

(43) Veröffentlichungstag der Anmeldung:
**13.02.91 Patentblatt 91/07**

(45) Bekanntmachung des Hinweises auf die Patenterteilung:
**19.01.94 Patentblatt 94/03**

(84) Benannte Vertragsstaaten:
**AT BE CH DE FR GB IT LI NL SE**

(56) Entgegenhaltungen:
**DE-A- 2 549 561**
**FR-A- 1 258 552**
**FR-A- 2 138 436**
**FR-A- 2 492 506**
**GB-A- 2 161 962**

**R.ISERMANN:DIGITALE REGELSYSTEME,SPRINGER VERLAG 1977,S.1 bis 4.**

(73) Patentinhaber: **Landis & Gyr Business Support AG**

**CH-6301 Zug(CH)**

(72) Erfinder: **Nauer, Paul**
**Grabenackerstrasse 45**
**CH-6312 Steinhausen(CH)**
Erfinder: **Ries, Peter, Dr.**
**Pfeffikerstrasse 16**
**CH-5734 Reinach(CH)**

(74) Vertreter: **Müller, Hans-Jürgen, Dipl.-Ing. et al**
**Müller, Schupfner & Gauger**
**Postfach 10 11 61**
**D-80085 München (DE)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum Regeln der Temperatur eines Heizkessels gemäß dem Oberbegriff des Anspruchs 1 sowie auf einen Regler gemäß dem Oberbegriff der Ansprüche 5 und 6.

Solche Verfahren und Regler werden vorteilhaft bei der Regelung nicht modulierender Brenner im Zusammenhang mit der Beheizung von Gebäuden angewendet.

Ein Verfahren der im Oberbegriff des Anspruchs 1 genannten Art ist aus der DE-PS 25 49 561 bekannt. Dabei wird die Schaltdifferenz des den Heizkessel steuernden Reguliethermostats in Abhängigkeit von der durch die Kesselwasser-Solltemperatur charakterisierten Lastabhängigkeit variiert.

Die Kesselwasser-Solltemperatur wird vielfach aus der Außentemperatur abgeleitet. Die wahre Last eines Wärmeerzeugers ist aber nicht allein durch die Außentemperatur bestimmt, sondern wird auch dadurch beeinflußt, wieviele Räume beheizt werden sollen und wie weit die Soll-Temperatur der zu beheizenden Räume bereits erreicht worden ist. Trotz niedriger Außentemperatur und daraus abgeleiteter hoher Kesselwasser-Solltemperatur kann es vorkommen, daß die vom Kessel geforderte Last momentan klein ist, so daß bei der vorgegebenen kleinen Schaltdifferenz kleine Brennerlaufzeiten auftreten. Kleine Brennerlaufzeiten sind aber unerwünscht und durch staatliche Vorschriften für unzulässig erklärt worden.

Der Erfindung liegt die Aufgabe zugrunde, ein Verfahren und eine Vorrichtung zur Durchführung des Verfahrens zu schaffen, bei dem bzw. der die geforderte Mindestbrennerlaufzeit eingehalten wird.

Die genannte Aufgabe wird erfindungsgemäß durch die Merkmale der Ansprüche 1, 5 und 6 gelöst. Vorteilhafte Ausgestaltungen ergeben sich aus den Ansprüchen 2 bis 4 und 7ff.

Nachfolgend wird ein Ausführungsbeispiel der Erfindung anhand der Zeichnung näher erläutert.

Es zeigen:

Fig. 1    ein Schema einer ersten Ausführungsform eines Reglers samt dem zu steuernden Heizkessel und

Fig. 2    ein Schema einer weiteren Ausführungsform eines Reglers.

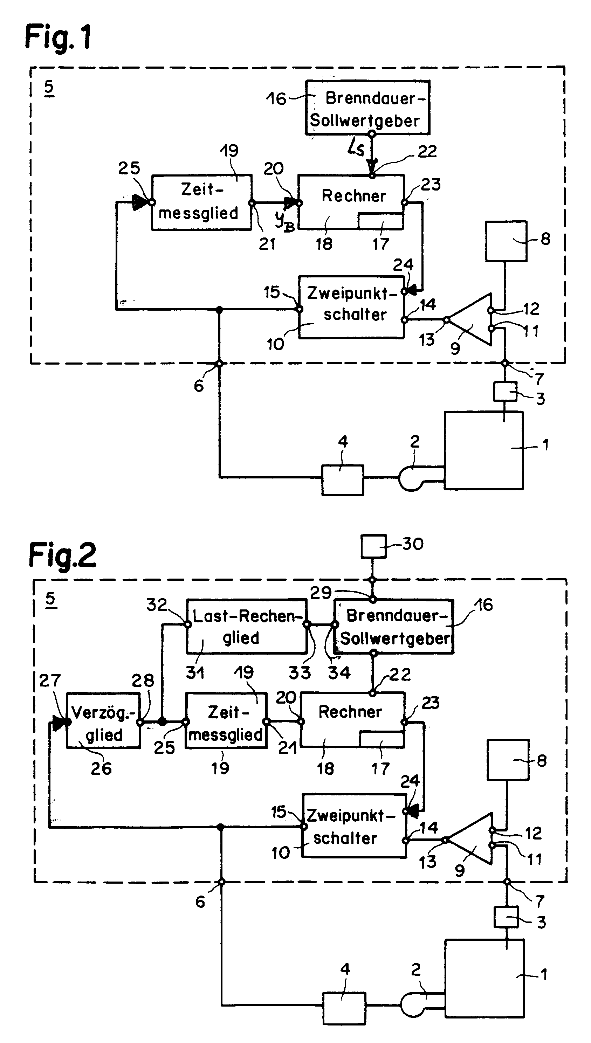

In der Fig. 1 bedeutet 1 einen Heizkessel mit einem Brenner 2 und einem die Temperatur des Wärmeträgermediums im Heizkessel 1 erfassenden Temperaturfühler 3. Der Brenner 2 wird in bekannter Art und Weise von einem Feuerungsautomaten 4 gesteuert. Dieser wird wiederum angesteuert von einem Regler 5.

Der Regler 5 besitzt einen Ausgang 6 zum Anschluß des Feuerungsautomaten 4 und einen Eingang 7, an den der Temperaturfühler 3 angeschlossen ist. Die Anordnung zur Regelung der Kesselwassertemperatur des Heizkessels 1 besteht aus dem Temperaturfühler 3, einem Temperatur-Sollwertgeber 8, einem Komparator 9 und einem Zweipunktschalter 10. Dabei verfügt der Komparator 9 über einen ersten Eingang 11, der mit dem Eingang 7 des Reglers 5 und somit mit dem Temperaturfühler 3 verbunden ist, und einen zweiten Eingang 12, an den der Sollwertgeber 8 angeschlossen ist. Der Ausgang 13 des Komparators 9 ist mit einem ersten Eingang 14 des Zweipunktschalters 10 verbunden. Der Zweipunktschalter 10 weist einen Ausgang 15 auf, der mit dem Ausgang 6 des Reglers 5 und somit mit dem Feuerungsautomaten 4 verbunden ist.

Dieser Regelkreis funktioniert wie folgt: Der Istwert der Temperatur im Heizkessel 1, gemessen mit dem Temperaturfühler 3, wird durch den Komparator 9 mit dem im Temperatur-Sollwertgeber 8 enthaltenen Sollwert verglichen. Der Komparator 9 gibt ein Signal ab, das die Differenz zwischen Ist- und Sollwert der Temperatur im Heizkessel 1 darstellt. Dieses Signal wird dem Zweipunktschalter 10 zugeführt. Der Zweipunktschalter 10 liefert ein Signal "1" an seinem Ausgang 15 dann, wenn der Istwert der Temperatur im Heizkessel 1 um eine bestimmte Differenz kleiner ist als der Sollwert der Temperatur. Er liefert ein Signal "0" an seinem Ausgang 15 dann, wenn der Istwert der Temperatur im Heizkessel 1 gleich oder größer ist als der Sollwert der Temperatur. Durch einen Wechsel des Signals am Ausgang 15 des Zweipunktschalters und somit auch am Eingang des Feuerungsautomaten 4 von "0" auf "1" schaltet der Feuerungsautomat 4 ein und durch einen Wechsel des Signals am Ausgang 15 des Zweipunktschalters und somit auch am Eingang des Feuerungsautomaten 4 von "1" auf "0" schaltet der Feuerungsautomat 4 aus. Zweckmäßigerweise wird jener Temperaturwert, bei dem Gleichheit zwischen Ist- und Sollwert besteht, als Ausschaltpunkt $T_a$ bezeichnet, während jener Temperaturwert, der um eine bestimmte Temperaturdifferenz D unter dem Sollwert liegt, als Einschaltpunkt $T_e$ bezeichnet wird.

Durch das Starten des Feuerungsautomaten 4 läuft dessen Inbetriebsetzungsvorgang an, der verschiedene Phasen, nämlich Vorspülung und Vorzündung usw. umfaßt. Erst zu einem späteren Zeitpunkt befindet sich dann der Brenner 2 in Betrieb und produziert Wärme. Die Zeitspanne zwischen dem Start des Feuerungsautomaten 4 und dem Beginn der Wärmeerzeugung wird als Inbetriebsetzungszeit $t_e$ bezeichnet. Nun produziert der Brenner 2 Wärme, wodurch das Wärmeträgermedium im Heizkessel 1 aufgeheizt wird. Dadurch steigt die Temperatur im Heizkessel 1, was vom Temperaturfühler 3 gefühlt wird. Sobald nun die Temperatur im Heizkessel 1 so weit gestiegen ist, daß der Istwert dem Sollwert gleicht, also der feste Ausschaltpunkt $T_a$ erreicht ist, so gibt der Komparator 9 ein entsprechendes Signal an den Zweipunktschalter 10 ab. Am Ausgang 15 des Zweipunktschalters 10 wechselt daraufhin das Signal von "1" auf "0" und dadurch wird der Feuerungsautomat 4 und mithin der Brenner 2 ausgeschaltet. Die Zeitspanne, während der der Brenner 2 eingeschaltet war, wird nachfolgend als Einschaltzeit $t_{EIN}$ bezeichnet. Wird dem Heizkessel 1 nun warmes Wärmeträgermedium entnommen, so kühlt der Heizkessel 1 wieder ab. Sobald der Istwert der Temperatur unter den Einschaltpunkt $T_e$ fällt, wechselt das Signal am Ausgang 15 des Zweipunktschalters 10 wieder von "0" auf "1" und dadurch wird der Inbetriebsetzungsvorgang für den Brenner 2 wieder gestartet.

Nachfolgend wird nun ein zweiter Regelkreis beschrieben, der der Regelung der Brennerlaufzeit dient. Dieser Regelkreis besteht aus einem Brenndauer-Sollwertgeber 16, einem einen Speicher 17 enthaltenden Rechner 18, einem Zeitmeßglied 19 und dem schon erwähnten Zweipunktschalter 10. Der Rechner 18 weist einen ersten Eingang 20 auf, der mit einem Ausgang 21 des Zeitmeßglieds 19 verbunden ist, sowie einen zweiten Eingang 22, an den der Brenndauer-Sollwertgeber 16 angeschlossen ist. Außerdem besitzt der Rechner 18 einen Ausgang 23, der mit einem bisher noch nicht erwähnten zweiten Eingang 24 des Zweipunktschalters 10 verbunden ist. Durch eine Verbindung zwischen dem Ausgang 15 des Zweipunktschalters 10 mit einem Eingang 25 des Zeitmeßglieds 19 ist dieser Regelkreis zur Regelung der Brennerlaufzeit geschlossen.

Nachfolgend wird die Funktion dieses Regelkreises beschrieben. Es sei zunächst angenommen, daß der Zweipunktschalter 10 den Brenner 2 abgeschaltet habe. Verursacht durch die Last am Heizkessel 1 kühlt dieser nun ab. Sobald der Istwert der Temperatur unter den Einschaltpunkt $T_e$ fällt, wird der Brenner 2 wie zuvor beschrieben eingeschaltet. Dadurch wechselt auch das Signal am Eingang 25 des Zeitmeßglieds 19 von "0" auf "1". Damit wird das Zeitmeßglied 19 gestartet. Solange das Signal am Eingang 25 den Wert "1" hat, läuft das Zeitmeßglied 19 weiter. Sobald der Zweipunktschalter 10 durch einen Wechsel seines Ausgangssignals von "1" auf "0" den Brenner 2 wieder abschaltet, wird dieser Signalwechsel auch vom Zeitmeßglied 19 erkannt, da dieser Signalwechsel auch an seinem Eingang 25 auftritt. Das Zeitmeßglied 19 gibt nun an seinem Ausgang 21 ein Signal $Y_B$ ab, das mit der zurückliegenden Einschaltzeit $t_{EIN}$ korreliert ist. Dieses Signal erscheint am Eingang 20 des Rechners 18.

Aus der Einschaltzeit $t_{EIN}$ bzw. dem Signal $Y_B$ berechnet nun der Rechner 18 eine Regelabweichung E als Differenz von gemessener Einschaltzeit $t_{EIN}$ und im Brenndauer-Sollwertgeber 16 abgelegten Sollwert $L_s$ für die Brennerlaufzeit. Daraus berechnet der Rechner 18 weiter die relative Regelabweichung e als Quotient von Regelabweichung E und Sollwert $L_s$ für die Brennerlaufzeit. Aus der relativen Regelabweichung e, dem im Speicher 17 abgelegten Ausschaltpunkt $T_a$ und dem ebenfalls im Speicher 17 abgelegten Wert des bisherigen Einschaltpunktes $T_{ea}$ berechnet dann der Rechner 18 einen neuen Einschaltpunkt $T_e$ gemäß der Formel

$$T_e = T_a - [(T_a - T_{ea}) / (1 + e)].$$

Dieser Wert wird in den Speicher 17 geschrieben, wo er dann für eine nächste Berechnung im nächsten Arbeitszyklus zur Verfügung steht, wobei unter Arbeitszyklus eine Aufeinanderfolge einer Einschalt- und einer Ausschaltperiode zu verstehen ist. Die zeitliche Länge eines Arbeitszyklus ist somit die Summe von Einschaltzeit $t_{EIN}$ und Ausschaltzeit $t_{AUS}$.

Der berechnete Einschaltpunkt $T_e$ erscheint am Ausgang 23 des Rechners 18 und somit auch am Eingang 24 des Zweipunktschalters 10. Das nächste Einschalten des Brenners 2 erfolgt nun bei dem neu berechneten Einschaltpunkt $T_e$. Auf diese Weise kann die Einschaltzeit $t_{EIN}$ des Brenners 2 nach dem Sollwert geregelt werden.

Die Berechnung im Rechner 18 kann in vorteilhafter Weise vereinfacht werden, wenn nicht über mehrere Operationen der Einschaltpunkt $T_e$, sondern stattdessen die Temperaturdifferenz D als Differenz von Ausschaltpunkt $T_a$ und Einschaltpunkt $T_e$ berechnet wird. Im Speicher 17 wird dann nicht ein berechneter Einschaltpunkt $T_e$, sondern die berechnete Temperaturdifferenz D gespeichert. Vorteilhaft ist dabei außerdem, daß weniger Speicherplatz benötigt wird, weil der Ausschaltpunkt $T_a$ nicht im Speicher 17 abgelegt werden muß.

Die Berechnung einer neuen Temperaturdifferenz D erfolgt durch Bildung des Produkts aus der im Speicher 17 abgelegten bisherigen Temperaturdifferenz D und dem Quotienten aus dem Sollwert $L_s$ für die Brennerlaufzeit und dem Signal Y. Der berechnete Wert der Temperaturdifferenz D erscheint am Ausgang 23 des Rechners 18 und somit auch am Eingang 24 des Zweipunktschalters 10. Der Zweipunktschalter 10 bestimmt durch Subtraktion der Temperaturdifferenz D vom Ausschaltpunkt $T_a$ den neuen Einschaltpunkt $T_e$ für das nächste Einschalten des Brenners 2. Auch auf diese Weise kann die Einschaltzeit $t_{EIN}$ des Brenners 2 nach dem Sollwert geregelt werden.

Es ist vorteilhaft, zwischen den Ausgang 15 des Zweipunktschalters 10 und den Eingang 25 des Zeitmeßglieds 19 ein Verzögerungsglied 26 (Fig. 2) zu schalten und zwar so, daß der Eingang 27 des Verzögerungsglieds 26 mit dem Ausgang 15 des Zweipunktschalters 10 und der Ausgang 28 des Verzögerungsglieds 26 mit dem Eingang 25 des Zeitmeßglieds 19 verbunden ist.

Das Verzögerungsglied 26 verzögert ein an seinem Eingang 27 anliegendes Signal mit positiver Flanke um eine einstellbare Zeit, läßt aber ein Signal mit negativer Flanke unverändert. Das bedeutet, daß ein Signalwechsel von "0" zu "1" am Eingang 27 des Verzögerungsglieds 26 um die einstellbare Zeit verzögert zu einem Signalwechsel von "0" zu "1" an seinem Ausgang 28 führt, während ein Signalwechsel von "1" zu "0" am Eingang 27 unmittelbar im selben Moment zu einem Signalwechsel von "1" zu "0" am Ausgang 28 führt. Wenn diese Zeit so eingestellt wird, daß sie gleich groß ist wie die Inbetriebsetzungszeit $t_e$ eines Feuerungsautomaten 4, so steht am Ausgang 28 des Verzögerungsglieds 26 ein Signal "0" immer genau so lange an, wie der Brenner 2 ausgeschaltet ist, und ein Signal "1" immer genau so lange, wie der Brenner 2 eingeschaltet ist.

Dadurch wird erreicht, daß das Zeitmeßglied 19 anstelle der Einschaltzeit des Feuerungsautomaten 4 annähernd die wirkliche Einschaltzeit des Brenners 2 ermitteln kann. Somit entspricht das Signal $Y_B$ genau der Einschaltzeit $t_{EIN}$.

Es wäre natürlich auch möglich, vom Brenner 2 ein die wirkliche Brennerlaufzeit repräsentierendes Signal, beispielsweise ein Einschaltsignal für die Ölförderpumpe, direkt auf den Eingang 25 des Zeitmeßglieds 19 zu speisen. Dadurch könnte zwar das Verzögerungsglied 26 entfallen, jedoch würde eine zusätzliche Leitungsverbindung zwischen Brenner 2 und Zeitmeßglied 19 nötig. Dies kann ein Nachteil sein, wenn die Leitungsführung möglichst einfach gehalten werden soll.

Es ist weiterhin vorteilhaft, den Sollwert $L_s$ der Brenndauer nicht konstant zu lassen, sondern je nach der herrschenden Außentemperatur zu variieren. Der Brenndauer-Sollwertgeber 16 besitzt zu diesem Zweck einen Eingang 29, an den ein Außentemperatur- oder Witterungsfühler 30 angeschlossen ist.

Im Brenndauer-Sollwertgeber 16 ist eine Wertetabelle für zu verschiedenen Außentemperaturen zugehörige Brenndauer-Sollwerte $L_s$ abgelegt. An seinem Ausgang liefert der Brenndauer-Sollwertgeber 16 jenen Brenndauer-Sollwert $L_s$, der der herrschenden Witterung entspricht. Hohen Außentemperaturen sind dabei kleine Brenndauer-Sollwerte $L_s$, niedrigen Außentemperaturen größere Brenndauer-Sollwerte $L_s$ zugeordnet. Damit wird erreicht, daß die Brenndauer bei niedrigen Außentemperaturen, bei denen insgesamt ein höherer Wärmebedarf besteht, über den geforderten Mindestwert hinaus vergrößert wird. Damit wird gleichzeitig ein unnötiges Takten des Brenners 2 vermieden.

Als Alternative oder in Kombination dazu kann vorteilhafterweise der Sollwert $L_s$ der Brenndauer auch eine Korrektur durch die am Heizkessel 1 herrschende wirkliche Last erfahren. Um eine solche Korrektur ausführen zu können, ist zusätzlich ein Last-Rechenglied 31 nötig, dessen Eingang 32 mit dem Eingang 25 des Zeitmeßglieds 19 und dessen Ausgang 33 mit einem zweiten Eingang 34 des Brenndauer-Sollwertgebers 16 verbunden ist.

Dieses Rechenglied 31 ermittelt aus den Zeiten, während denen an seinem Eingang 32 die Signale "0" und "1" anliegen, die Last. Der Quotient aus der Zeit, während der an seinem Eingang 32 das Signal "1" anliegt, und der Zeit, während der seinem Eingang 32 eine einzelne Signalfolge "0" und "1" anliegt, entspricht dabei der wirklichen Kesselbelastung. Dieser Quotient entspricht nämlich dem Quotienten aus der Einschaltzeit ($t_{EIN}$) und der Summe von Einschaltzeit ($t_{EIN}$) und Ausschaltzeit ($t_{AUS}$).

Dieses Belastungssignal steht am Ausgang 33 des Rechenglieds 31 zur Verfügung. Im Brenndauer-Sollwertgeber (16) ist eine weitere Wertetabelle für zu verschiedenen Lasten zugehörige Brenndauer-Sollwerte $L_s$ abgelegt. An seinem Ausgang liefert der Brenndauer-Sollwertgeber 16 jenen Brenndauer-Sollwert $L_s$, der der herrschenden Last entspricht. Hohen Lasten sind dabei große Brenndauer-Sollwerte $L_s$, geringen Lasten kleinere Brenndauer-Sollwerte $L_s$ zugeordnet. Damit wird erreicht, daß die Brenndauer bei höheren Lasten über den geforderten Mindestwert hinaus vergrößert wird. Damit wird gleichzeitig ein unnötiges Takten des Brenners vermieden.

## Patentansprüche

1. Verfahren zum Regeln der Temperatur eines nicht modulierenden Heizkessels (1), dessen Brenner (2) eingeschaltet wird, sobald die Temperatur im Heizkessel (1) einen Einschaltpunkt ($T_e$) unterschreitet, dadurch gekennzeichnet, daß ein Sollwert ($L_s$) für die Brennerlaufzeit vorgegeben wird und daß die Brennerlaufzeit durch Verschieben des Einschaltpunktes ($T_e$) auf diesen Sollwert ($L_s$) direkt geregelt wird.

2. Verfahren nach Anspruch 1, dadurch gekennzeichnet, daß der Sollwert ($L_s$) für die Brennerlaufzeit in Abhängigkeit von der Kesselbelastung variiert wird.

3. Verfahren nach Anspruch 2, dadurch gekennzeichnet, daß die Kesselbelastung ermittelt wird durch Bildung des Quotienten aus der Einschaltzeit ($t_{EIN}$) des Brenners und der Summe von Einschaltzeit ($t_{EIN}$) und Ausschaltzeit ($t_{AUS}$) des Brenners.

4. Verfahren nach Anspruch 2 oder 3, dadurch gekennzeichnet, daß als Maß für die Kesselbelastung die mit einem Außentemperatur- oder Witterungsfühler (30) ermittelten Wetterdaten benutzt werden.

5. Regler (5) zum Regeln der Temperatur eines nicht modulierenden Heizkessels (1) mit einem Sollwertgeber (8) für die Kesseltemperatur und einem Anschluß (7) für einen Istwertfühler (3) für die Kesseltemperatur, mit einem Komparator (9) für Soll- und Istwert und einem den Brenner (2) des Heizkessels (1) steuernden Zweipunktschalter (10), dadurch gekennzeichnet, daß ein Ausgang (15) des Zweipunktschalters (10) mit einem Eingang (25) eines Zeitmeßglieds (19) verbunden ist, daß das Zeitmeßglied (19) ein mit der Brenndauer des Brenners (2) korreliertes Signal ($Y_B$) erzeugt, daß ein Ausgang (21) des Zeitmeßglieds (19) mit einem ersten Eingang (20) eines Rechners (18) verbunden ist, daß ein Brenndauer-Sollwertgeber (16) mit einem zweiten Eingang (22) des Rechners (18) verbunden ist, daß der Rechner (18) aus einem in einem Speicher (17) abgelegten bisherigen Einschaltpunkt ($T_e$)-,dem Ausschaltpunkt ($T_a$) und dem mit der Brenndauer des Brenners (2) korrelierten Signal ($Y_B$) einen neuen Einschaltpunkt ($T_e$) für den Brenner (2) berechnet, daß der Rechner (18) diesen neuen Einschaltpunkt ($T_e$) in den Speicher (17) einschreibt und daß der Zweipunktschalter (10) einen zweiten Eingang (24) aufweist, dem dieser Einschaltpunkt ($T_e$) zugeführt wird.

6. Regler (5) zum Regeln der Temperatur eines nicht modulierenden Heizkessels (1) mit einem Sollwertgeber (8) für die Kesseltemperatur und einem Anschluß (7) für einen Istwertfühler (3) für die Kesseltemperatur, mit einem Komparator (9) für Soll- und Istwert und einem den Brenner (1) des Heizkessels (1) steuernden Zweipunktschalter (10), dadurch gekennzeichnet, daß ein Ausgang (15) des Zweipunktschalters (10) mit einem Eingang (25) eines Zeitmeßglieds (19) verbunden ist, daß das Zeitmeßglied (19) ein mit der Brenndauer des Brenners (2) korreliertes Signal ($Y_B$) erzeugt, daß ein Ausgang (21) des Zeitmeßglieds (19) mit einem ersten Eingang (20) eines Rechners (18) verbunden ist, daß ein Brenndauer-Sollwertgeber (16) mit einem zweiten Eingang (22) des Rechners (18) verbunden ist, daß der Rechner (18) aus einer in einem Speicher (17) abgelegten Temperaturdifferenz (D) und dem mit der Brenndauer des Brenners (2) korrelierten Signal ($Y_B$) eine neue Temperaturdifferenz (D) für den Brenner (2) berechnet, daß der Rechner (18) diese neue Temperaturdifferenz (D) in den Speicher (17) einschreibt, daß der Zweipunktschalter (10) einen zweiten Eingang (24) aufweist, dem diese Temperaturdifferenz (D) zugeführt wird und daß der Zweipunktschalter (10) aus der Temperaturdifferenz (D) und dem Ausschaltpunkt ($T_a$) einen neuen Einschaltpunkt ($T_e$) ermittelt.

7. Regler nach Anspruch 5 oder 6, dadurch gekennzeichnet, daß zwischen den Ausgang (15) des Zweipunktschalters (10) und den Eingang (25) des Zeitmeßglieds (19) ein Verzögerungsglied (26) geschaltet ist, daS dieses Verzögerungsglied (26) ein Signal mit positiver Flanke um eine einstellbare Zeit verzögert und daß diese Zeit gleich groß ist wie die Inbetriebsetzungszeit ($t_e$) eines Feuerungsautomaten (4).

8. Regler nach einem der Ansprüche 5 bis 7, dadurch gekennzeichnet, daß der Eingang des Zeitmeßglieds (19) mit dem Eingang eines Last-Rechenglieds (31) verbunden ist, daß das Last-Rechenglied (31) ein Signal erzeugt, das dem Quotienten aus der um die Inbetriebsetzungszeit ($t_e$) korrigierten Einschaltzeit ($t_{EIN}$) und der Summe von Einschalt- ($t_{EIN}$) und Ausschaltzeit ($t_{AUS}$) entspricht, und daß dieses Signal über eine Verbindung zwischen einem Ausgang (33) des Last-Rechenglieds (30) und einem Eingang (34) dem Brenndauer-Sollwertgeber (16) zugeführt wird.

9. Regler nach Anspruch 7 oder 8, dadurch gekennzeichnet, daß an einem Eingang (29) des Brenndauer-Sollwertgebers (16) ein Außentemperatur- oder Witterungsfühler (30) angeschlossen ist und daß im Brenndauer-Sollwertgeber (16) eine Wertetabelle für zu verschiedenen Außentemperaturen zugehörige Brenndauer-Sollwerte abgelegt ist.

**Claims**

1. Method for controlling the temperature of a non-modulated boiler (1), the burner (2) of which is switched on as soon as the temperature in the boiler (1) goes below a switch-on point ($T_e$), characterised in that a target value ($L_s$) for the burner running time is determined and that the burner running time is directly controlled by variation of the switch-on point ($T_e$) according to this target value ($L_s$).

2. Method according to claim 1, characterised in that the target value ($L_s$) for the burner running time is varied dependent upon the boiler load.

3. Method according to claim 2, characterised in that the boiler load is calculated by the formation of the quotients of the switched on time ($t_{EIN}$) of the burner and the sum of switched on time ($t_{EIN}$) and switched off time ($t_{AUS)}$ of the burner.

4. Method according to claim 2 or 3, characterised in that the weather data calculated by an external temperature or weather sensor (30) is used as a standard for the boiler load.

5. Controller (5) for controlling the temperature of a non-modulated boiler (1) with a setting device (8) for the boiler temperature and a connector (7) for an actual value sensor (3) for the boiler temperature, with a comparator (9) for target and actual values and a two position switch (10) for controlling th2e burner (2) of the boiler (1), characterised in that an output (15) of the two position switch (10) is connected to an input (25) of a timing element (19), that the timing element (19) produces a signal ($Y_B$) correlated with the burning time of the burner (2), that the output (21) of the timing element (19) is connected to a first input (20) of a computer (18), that a burning time setting device (16) is connected to a second input (22) of the computer (18), that the computer (18) calculates, from a switch on point ($T_e$) stored previously in a memory (17), the switch off point ($T_a$) and the signal ($Y_B$) correlated with the burning time of the burner (2), a new switch on point ($T_e$) for the burner (2), that the computer (18) writes this new switch on point ($T_e$) into the memory (17) and that the two position switch (10) is provided with a second input (24), to which this switch on point ($T_e$) is supplied.

6. Controller (5) for controlling the temperature of a non-modulated boiler (1) with a setting device (8) for the boiler temperature and a connector (7) for an actual value sensor (3) for the boiler temperature, with a comparator (9) for target and actual values and a two position switch (10) for controlling the burner (2) of the boiler (1), characterised in that an output (15) of the two position switch (10) is connected to an input (25) of a timing element (19), that the timing element (19) produces a signal ($Y_B$) correlated with the burning time of the burner (2), that an output (21) of the timing element (19) is connected to a first input (20) of a computer (18), that a burning time setting device (16) is connected to a second input (22) of the computer (18), that the computer (18) calculates, from a temperature differential (D) stored in a memory (17) and the signal ($Y_B$) correlated with the burning time of the burner (2), a new temperature differential (D) for the burner (2), that the computer (18) writes this new temperature differential into the memory (17), that the two position switch (10) is provided with a second input (24), to which this temperature differential (D) is supplied and that the two position switch (10) calculates a new switch on point ($T_e$) from the temperature differential (D) and the switch off point ($T_a$).

7. Controller according to claim 5 or 6, characterised in that between the output (15) of the two position switch (10) and the input (25) of the timing element (19) a time delay element (26) is connected, that this time delay element (26) delays a signal with a positive edge by a settable amount of time and that this time is the same as the initialisation time ($t_e$) of an automatic firing element (4).

8. Controller according to one of claims 5 to 7, characterised in that the input of the timing element (19) is connected to the input of a load calculating element (31), that the load calculating element (31) produces a signal which corresponds to the quotients of the switched on time ($t_{EIN}$) corrected by the initialisation time ($t_e$) and the sum of the switched on ($t_{EIN}$) and switched off ($t_{AUS}$) times, and that this signal is supplied to the burning time setting device (16) by means of a connection between the output (33) of the load calculating element (31) and an input (34).

9. Controller according to claim 7 or 8, characterised in that at an input (29) of the burning time setting device (16) an external temperature or weather sensor (30) is attached and that in the burning time setting device (16) a table of values for burning time target values corresponding to different external temperatures is stored.

**Revendications**

1. Procédé de réglage de la température d'une chaudière de chauffage sans modulation (1), dont le brûleur (2) est mis en marche dès que la température régnant dans la chaudière (1) descend sous un point d'enclenchement (T$_e$), caractérisé en ce qu'une consigne (L$_S$) du temps de marche du brûleur est prescrite et en ce que le temps de marche du brûleur est réglé directement par décalage du point d'enclenchement (T$_e$) de manière qu'il corresponde à cette consigne (L$_S$).

2. Procédé selon la revendication 1, caractérisé en ce que la consigne (L$_S$) du temps de marche du brûleur subit une variation en fonction de la charge de la chaudière.

3. Procédé selon la revendication 2, caractérisé en ce que la charge de la chaudière est déterminée par formation du quotient du temps d'enclenchement (t$_{EIN}$) du brûleur et de la somme du temps d'enclenchement (t$_{EIN}$) et du temps de mise hors service (t$_{AUS}$) du brûleur.

4. Procédé selon la revendication 2 ou 3, caractérisé en ce que la mesure utilisée pour la charge de la chaudière consiste en les données atmosphériques déterminées par un capteur (30) de la température extérieure ou des conditions atmosphériques.

5. Régulateur (5) de réglage de la température d'une chaudière de chauffage sans modulation (1), comprenant un générateur (8) de consigne de la température de la chaudière avec une connexion (7) à un capteur (3) de la valeur réelle de la température de la chaudière, un comparateur (9) de valeur de consigne et de valeur réelle et un commutateur (10) à deux positions qui commande le brûleur (2) de la chaudière (1), caractérisé en ce qu'une sortie (15) du commutateur (10) à deux positions est connectée à une entrée (25) d'un élément de chronométrage (19), en ce que l'élément de chronométrage (19) génère un signal (Y$_B$) qui est en corrélation avec la durée de combustion du brûleur (2), en ce qu'une sortie (21) de l'élément de chronométrage (19) est connectée à une première entrée (20) d'une calculatrice (18), en ce qu'un générateur (16) de consigne de durée de combustion est connecté à une seconde entrée (22) de la calculatrice (18), en ce que la calculatrice (18) calcule un nouveau point d'enclenchement (T$_e$) du brûleur (2) à partir d'un point d'enclenchement antérieur (T$_e$) enregistré dans une mémoire (17), du point de mise hors service (T$_a$) et du signal (Y$_B$) qui est en corrélation avec la durée de combustion du brûleur (2), en ce que la calculatrice (18) enregistre ce nouveau point d'enclenchement (T$_e$) dans la mémoire (17) et en ce que le commutateur (10) à deux positions comporte une seconde entrée (24) à laquelle ce point d'enclenchement (T$_e$) est envoyé.

6. Régulateur (5) de réglage de la température d'une chaudière de chauffage sans modulation (1), comprenant un générateur (8) de consigne de la température de la chaudière avec une connexion (7) à un capteur (3) de la valeur réelle de la température de la chaudière, un comparateur (9) de la valeur de consigne et de la valeur réelle et un commutateur à deux positions (10) qui commande le brûleur (2) de la chaudière (1), caractérisé en ce qu'une sortie (15) du commutateur à deux positions (10) est connectée à une entrée (25) d'un élément de chronométrage (19), en ce que l'élément de chronométrage (19) génère un signal (Y$_B$) qui est en corrélation avec la durée de combustion du brûleur (2), en ce qu'une sortie (21) de l'élément de chronométrage (19) est connectée à une première entrée (20) d'une calculatrice (18), en ce que le générateur (16) de consigne de durée de combustion est connecté à une seconde entrée (22) de la calculatrice (18), en ce que la calculatrice (18) calcule une nouvelle différence de température (D) pour le brûleur (2) à partir d'une différence de température (D) enregistrée dans une mémoire (17) et du signal (Y$_B$) qui est en corrélation avec la durée de combustion du brûleur (2), en ce que la calculatrice (18) enregistre cette nouvelle différence de température (D) dans la mémoire (17), en ce que le commutateur à deux positions (10) comprend une seconde entrée (24) sur laquelle est dirigée cette différence de température (D) et en ce que le commutateur à deux positions (10) détermine un nouveau point d'enclenchement (T$_e$) à partir de la différence de température (D) et du point de mise hors service (T$_a$).

7. Régulateur selon la revendication 5 ou 6, caractérisé en ce qu'un élément temporisateur (26) est branché entre la sortie (15) du commutateur à deux positions (10) et l'entrée (25) de l'élément de chronométrage (19), en ce que cet élément temporisateur (26) retarde d'un temps réglable un signal à flanc positif et en ce que ce temps est égal au temps de mise en service (t$_e$) d'un appareillage automatique d'allumage (4).

8. Régulateur selon l'une des revendications 5 à 7, caractérisé en ce que l'entrée de l'élément de chronométrage (19) est connectée à l'entrée d'un élément de calcul de charge (31), en ce que l'élément de calcul de charge (31) génère un signal qui correspond au quotient du temps d'enclenchement ($t_{EIN}$) corrigé du temps de mise en service ($t_e$) et de la somme du temps d'enclenchement ($t_{EIN}$) et du temps de mise hors service ($t_{AUS}$) et en ce que ce signal est envoyé au générateur (16) de consigne de durée de combustion par une connexion entre une sortie (33) de l'élément de calcul de charge (30) et une entrée (34) de ce générateur de consigne (16).

9. Régulateur selon la revendication 7 ou 8, caractérisé en ce qu'un capteur (30) de température extérieure ou des conditions atmosphériques est connecté à une entrée (29) du générateur (16) de consigne de durée de combustion et en ce qu'un tableau de valeurs de consigne de la durée de combustion qui correspondent à différentes températures extérieures est enregistré dans le générateur (16) de consigne de durée de combustion.

# Fig.1

# Fig.2